# EUROPEAN PATENT APPLICATION

(11) **EP 4 614 372 A1**
(43) Date of publication of application: **10.09.2025**
(21) Application number: 23885001.0
(22) Date of filing: 01.11.2023
(51) Int. Cl.: G06F 21/62, G06F 21/60

(54) **BLOCKCHAIN-BASED DATA TRANSACTION METHOD AND APPARATUS, COMPUTING DEVICE, AND STORAGE MEDIUM**

(30) Priority: 01.11.2022 CN 202211354659
(71) Applicant: China Mobile Group Design Institute Co., Ltd., Beijing 100080 (CN); China Mobile Communications Group Co., Ltd, Beijing 100032 (CN)
(72) Inventor: ZHANG, Chen, Beijing 100080 (CN); DU, Xuetao, Beijing 100080 (CN); ZHAO, Gang, Beijing 100080 (CN); WEN, Nuan, Beijing 100080 (CN); CHANG, Xiao, Beijing 100080 (CN); LI, Wenqi, Beijing 100080 (CN); DU, Gang, Beijing 100080 (CN); ZHANG, Gaoshan, Beijing 100080 (CN); CHANG, Jiayue, Beijing 100080 (CN)
(74) Representative: Maiwald GmbH
(86) International application number: PCT/CN2023/129122
(87) International publication number: WO 2024/094075

(57) **Abstract**

The present application discloses a blockchain-based data transaction method and apparatus, a computing device, and a computer storage medium. The blockchain-based data transaction method comprises: uploading second data corresponding to first data to a blockchain for a data demander to download the second data, wherein the first data is raw data; downloading a data processing program from the blockchain, wherein the data processing program is uploaded to the blockchain by the data demander; and processing the first data by using the data processing program so as to obtain a data processing result, and uploading the data processing result to the blockchain so as to return the data processing result to the data demander by means of the blockchain. According to the present application, a data provider replaces the data demander to complete the calculation of demand data, the data processing result is returned to the data demander, and a data transaction is converted into a transaction of the data processing program and the data processing result, so that it is ensured that the raw data does not go out of the network, and the security problems of transaction data leakage and abuse are avoided.

## Description

### TECHNICAL FIELD

The present disclosure relates to a field of data security, and particularly to a method and an apparatus for transacting data based on a blockchain, a computing device, and a storage medium.

### BACKGROUND

The related art for transacting data based on a blockchain technology mainly use an immutable feature of the blockchain technology to ensure the legality and security of a data transaction. First of all, participants for the data transaction jointly engage into a blockchain of the transaction. Then, data, a summary and other content of the transaction are uploaded to the blockchain via different encryption methods. After the two parties of the transaction agree on the transaction, a data decryption method or data that can be decrypted only by a data demander will be obtained and used by the data demander after a decryption.

### SUMMARY

In view of the above problems, the embodiments of the disclosure provide a method and an apparatus for transacting data based on a blockchain, a computing device and a storage medium that overcomes problems like a transaction data leakage and a transaction data abuse existing in the above data transaction.

According to a first aspect of embodiments of the present disclosure, there is provided a method for transacting data based on a blockchain, including: uploading second data corresponding to first data to a blockchain, for a data demander to download the second data, in which the first data is raw data; downloading a data application software from the blockchain, in which the data application software is uploaded by the data demander to the blockchain; and obtaining a data processing result by processing the first data using the data application software, uploading the data processing result to the blockchain, and returning the data processing result to the data demander via the blockchain.

In an optional implementation, the second data includes at least one of: sample data, data attributes, desensitized data, or pseudo data.

In an optional implementation, after uploading the second data corresponding to the first data to the blockchain, the method further includes: auditing the second data via a data auditor, for the data demander to download audited second data; before downloading the data application software from the blockchain, the method further includes: auditing the data application software via the data auditor; before uploading the data processing result to the blockchain, the method further includes: auditing the data processing result via the data auditor.

In an optional implementation, before downloading the data application software from the blockchain, the method further includes: issuing a license to the data application software via a data auditor before the data demander uploads the data application software to the blockchain; before uploading the data processing result to the blockchain, the method further includes: encrypting the data processing result with a public key; before uploading the data processing result to the blockchain, the method further includes: issuing a license to the data processing result via the data auditor.

In an optional implementation, after downloading the data application software from the blockchain, the method further includes: generating a test contract via the blockchain, and uploading a test result to the blockchain, in which the test result is obtained by processing the data application software; and generating a formal transaction contract based on the test result that has passed through an audit of the data auditor and an agreement of the data demander.

In an optional implementation, the auditing includes: completing the auditing in an automatic or semi-automatic manner, and generating a complete code contract after a confirmation from a plurality of parties, in which the plurality of parties include the data provider, the data demander, and the data auditor in the blockchain.

In an optional implementation, the blockchain includes: an identity chain, a sample chain, and a contract chain; in which the identity chain is configured to perform identity authentication of a data provider, the data demander and a data auditor in the blockchain; the sample chain is configured to store the second data and the data application software; and the contract chain is configured to perform a contract transaction on the data application software and the data processing result.

According to another aspect of embodiments of the present disclosure, there is provided an apparatus for transacting data based on a blockchain, including: a data uploading module, a downloading module, and a data processing module. The data uploading module is configured to upload second data corresponding to first data to a blockchain, for a data demander to download the second data, in which the first data is raw data; the downloading module is configured to download a data application software from the blockchain, in which the data application software is uploaded by the data demander to the blockchain; and the data processing module is configured to obtain a data processing result by processing the first data using the data application software, upload the data processing result to the blockchain, and return the data processing result to the data demander via the blockchain.

According to another aspect of embodiments of the present disclosure, there is provided a computing device, including: a processor, a memory, a communication interface and a communication bus, in which the processor, the memory and the communication interface communicate with each other via the communication bus; the memory is configured to store at least one executable instruction, in which the executable instruction causes the processor to perform operations of the method for transacting data based on a blockchain.

According to another aspect of embodiments of the present disclosure, there is provided a computer storage medium for storing at least one executable instruction, in which the executable instruction causes the processor to perform operations of the method for transacting data based on a blockchain.

According to a solution in the disclosure, second data corresponding to first data is uploaded to a blockchain for a data demander to download the second data, in which the first data is raw data; a data application software is downloaded from the blockchain, in which the data application software is uploaded by the data demander to the blockchain; and a data processing result is obtained by processing the first data using the data application software, the data processing result is uploaded to the blockchain, and the data processing result is returned to the data demander via the blockchain. In the disclosure, a data provider will no longer upload the first data (that is, raw data) to the blockchain, but upload the second data (that is, desensitized data and pseudo data corresponding to the raw data) to the blockchain. The data provider, taking the place of the data demander, will complete a calculation of demand data, and return the data processing result to the data demander. The data provider and the data demander will not transact the raw data, and a transaction of the raw data is transformed into a transaction of the data application software and the data processing result, which ensures that the raw data is not out of the network, effectively avoids the risk of the transaction data not being used according to an agreed purpose, and avoids security problems such as a transaction data leakage and a transaction data abuse.

The above description is only an overview of the technical solution of the disclosure. In order to better understand the technical means of the disclosure, it can be implemented in accordance with the contents of the disclosure, and in order to make the above and other purposes, features and advantages of the disclosure more clearly understood, specific implementations of the disclosure are listed below.

### BRIEF DESCRIPTION OF THE DRAWINGS

By reading the detailed description of the preferred embodiments below, various advantages and benefits will become clear to those skilled in the art. The drawings are intended to indicate preferred embodiments but are not construed to limit the scope of the present disclosure. In the attached drawings, the same components are represented by the same reference numbers.
FIG. 1 is a flowchart of a method for transacting data based on a blockchain according to embodiments of the disclosure.
FIG. 2 is a schematic diagram of a blockchain network according to embodiments of the disclosure.
FIG. 3 is a schematic diagram of a data provider participation based on a blockchain according to embodiments of the disclosure.
FIG. 4 is a schematic diagram of a data demander participation based on a blockchain according to embodiments of the disclosure.
FIG. 5 is a schematic diagram of a data auditor based on a blockchain according to embodiments of the disclosure.
FIG. 6 is a schematic diagram of steps for transacting data based on a blockchain according to embodiments of the disclosure.
FIG. 7 is a structural diagram of an apparatus for transacting data based on a blockchain according to embodiments of the disclosure.
FIG. 8 is a structural diagram of a computing device according to embodiments of the disclosure.

### DETAILED DESCRIPTION

The exemplary embodiments of the disclosure are described in detail below with reference to the attached drawings. Although the exemplary embodiments of the disclosure are shown in the attached drawings, it should be understood that the disclosure can be implemented in various forms and should not be limited by the embodiments of the disclosure. Instead, these embodiments are provided for a more thorough understanding of the disclosure and to completely convey the scope of the disclosure to those skilled in the art.

The related art for transacting data based on the blockchain technology mainly use the immutable feature of the blockchain technology to ensure the legality and security of the data transaction. First, participants of the data transaction jointly engage into the blockchain of the transaction. Then, the data, the summary and other content of the transaction are uploaded to the blockchain via different encryption methods. After the two parties of the transaction agree on the transaction, the data decryption method or data that can be decrypted only by the data demander will be obtained and used by the data demander after the decryption. However, after the data transaction is completed, whether the data obtainer uses the data beyond the purpose of the transaction is no longer controlled by the transaction, and there is a certain risk of data abuse. The data processing method based on fully homomorphic encryption can process the data without accessing the data itself, but the data analysis speed is slow due to a limitation from the encryption method. In fact, target data is still involved in the data transaction, and there is no guarantee that the encrypted data will not be cracked. At present, the raw data (also called as original data) is transacted in the existing technical solutions for transacting data, but the encryption method of the data is slightly different during the transaction.

The related art for transacting data based on a blockchain has the following problems that need to be further optimized: First, the risk of data leakage still exists. Whether a hash algorithm, symmetric encryption technology or asymmetric encryption technology is used, the final result is that the demander obtains complete raw data, but whether the raw data is properly protected in the hands of the demander cannot be traced. Second, the risk of data abuse still exists. After the demander obtains the target data, whether the demander processes the target data according to the agreement cannot be traced, and there is no guarantee that the transaction data can be legally used. The third one is the problem of lagging supervision. Although the immutable feature of the blockchain is used to ensure the traceability of the data transaction, the rationality, compliance and legality of the data transaction cannot be guaranteed, and irrational data transactions can only be traced back afterwards, but cannot prevent the circulation of important transaction data in advance.

Before implementing the embodiments of the disclosure, the technical terms mentioned in the following text are interpreted here.

Blockchain: a consortium blockchain, that is, a blockchain jointly managed by several organizations or institutions, in which each organization or institution controls one or more nodes to jointly record transaction data, and only these organizations or institutions can perform reading and writing of the data in the consortium blockchain and transaction sending.

Data provider: a data production unit, which is a data owner.

Data demander: a data demand unit, which performs various calculations using data to meet corresponding service needs.

Data auditor (auditor): a management unit of the data production unit, responsible for determining whether the rationality, compliance, and legality of data calculation requirements are met.

Sample data: desensitized data and pseudo data uploaded by the data provider to the blockchain, where the desensitizing refers to deformation of the data based on a desensitization rule for some sensitive information to achieve the reliability protection of sensitive privacy data.

Attribute of data: also called as data attributes, including a nominal attribute, a binary attribute, an ordinal attribute, a numerical attribute, a discrete attribute and a continuous attribute.

Nominal attribute: The values of the nominal attribute are some symbols or a name of an object, in which each value represents a certain category, a code or a state, so the nominal attribute is also regarded as a categorical attribute. These values do not have to have a meaningful order and are not quantitative.

Binary attribute: a nominal attribute with only two categories or states: 0 or 1, in which 0 often means that it does not occur, and 1 means that it occurs. If 0 and 1 correspond to false and true, the binary attribute is a Boolean attribute.

Ordinal attribute: the ordinal attribute has a meaningful order or ranking evaluation between possible values, but the difference between successive values is unknown. For example, an grade attribute of a student can be divided into four levels: excellent, good, medium, and poor. The size of a drink cup in a fast-food restaurant can be divided into three possible values: large, medium, and small. However, how much larger the size "large" is than the size "medium" is unknown.

Numerical attribute: the numerical attribute is a measurable quantity, represented by an integer or a real value.

Discrete attribute and continuous attribute: There may be a finite or infinite countable number of discrete attributes and continuous attributes, which can be represented by or not represented by integers. If an attribute is not discrete, the attribute is continuous.

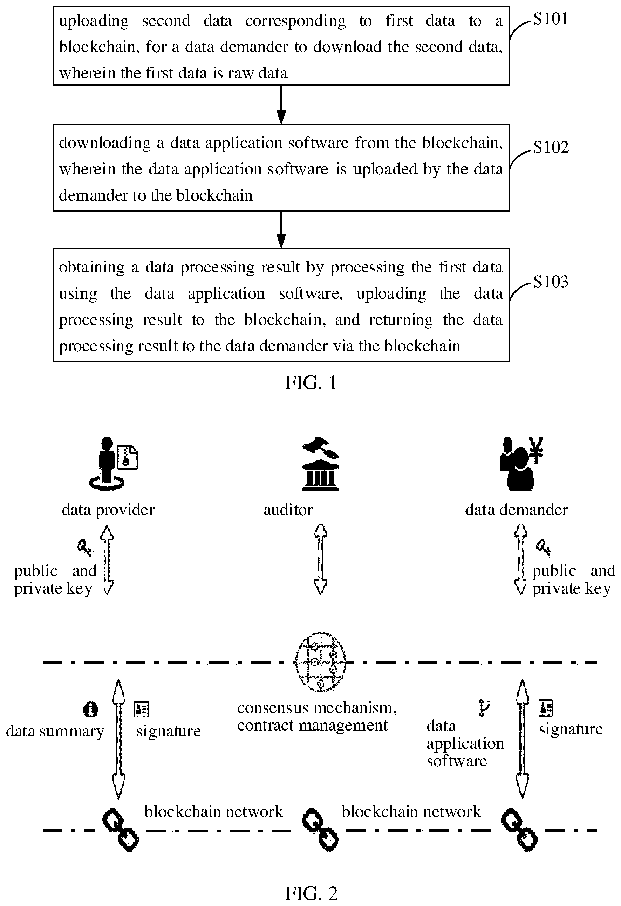

FIG. 2 is a schematic diagram of a blockchain network according to embodiments of the disclosure. As illustrated in FIG. 2, a trusted blockchain network includes three parties: a data provider, a data demander, and a auditor. The data provider and the data demander upload their public keys, and the auditor acts as a trusted center to confirm the identity of the participant on the blockchain, for increasing the credibility of the participants in the blockchain. At the same time, the data provider will no longer upload raw data (also called as first data) to the blockchain, but will upload the pseudo data and desensitized data (also called as second data) to the blockchain, and upload data attributes of the second data to the blockchain synchronously, which is verified by a plurality of participants and the auditor to ensure the authenticity and availability of the data. According to the service needs, the data demander views the data attributes uploaded by the data provider on the blockchain, and then uploads a data application software, which will be published on the blockchain after being confirmed by the auditor. That is, the auditing method of each step can be completed automatically, semi-automatically or in a fully manual way, but uploading of the data processing result into the blockchain needs a consensus reached by a plurality of parties, otherwise the data processing result will be returned or modified to start again.

FIG. 1 is a flowchart of a method for transacting data based on a blockchain according to embodiments of the disclosure. An executive body of the method can be a data provider illustrated in FIG. 2. The data provider, taking the place of the data demander, will complete a calculation of demand data, and return the data processing result to the data demander, which transforms a transaction of the raw data into a transaction of the data application software and the data processing result. Specifically, as illustrated in FIG. 1, S101, S102, and S103 are included.

At S101, second data corresponding to first data is uploaded to a blockchain, for a data demander to download the second data, in which the first data is raw data.

In service scenarios of big data, uploading the raw data to the blockchain will not only put a pressure on the storage capacity of the blockchain, but also the risk of data leakage still exists. Therefore, the data provider no longer uploads the raw data to the blockchain, but desensitizes the raw data and uploads a representative data sample. A data forgery can also be carried out with reference to the raw data, and the pseudo data that retains the features of the raw data can be uploaded to the blockchain for other users to view the data on the blockchain. In order to maintain the integrity of the data, when uploading the desensitized data and pseudo data, data attribute information such as a scope and a scale of the data are uploaded together.

In this embodiment, the data provider participating in the blockchain does not upload the raw data, that is, the raw data is not saved on the blockchain, and only the sample data, the data attributes, the desensitized data, and the pseudo data corresponding to the raw data are uploaded to the blockchain, for the data demander to view and download the data. The sample data, the data attributes, the desensitized data and the pseudo data corresponding to the raw data are called the second data. Optionally, the second data includes at least one of: the sample data, the data attributes, the desensitized data, or the pseudo data.

Further, in order to enhance the credibility and reliability of transaction data (such as the second data, the data application software, and the data processing result) and ensure the legality and compliance of the data transaction, a data auditor is added to a process or a step of the data transaction, and problems are solved that there is a lack of the credibility in the data transaction process and it is difficult to obtain the data in the data transaction process. The data auditor can be a third-party institution that is mutually trusted by both parties of the transaction or a government-designated organization. The transaction data can only be transferred to a next step when it is approved by the data auditor.

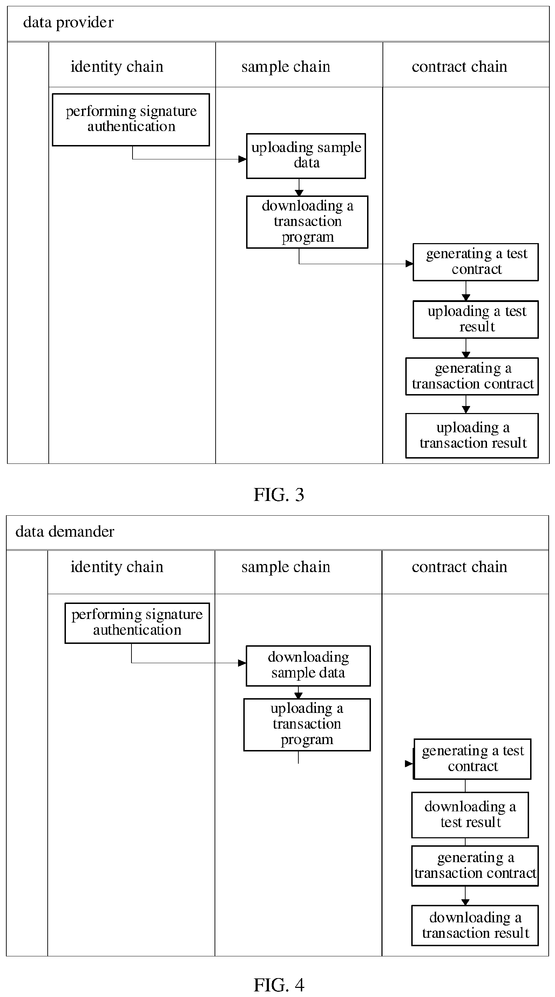

Further, in order to conduct a transaction processing, a storage and a management of the transaction data, according to an application scenario of the data transaction, the blockchain is divided into a blockchain or an industry chain in following vertical fields: an identity chain, a sample chain, and a contract chain. The identity chain is configured to perform identity authentication of a data provider, the data demander and a data auditor in the blockchain. The data provider, the data demander, and the data auditor jointly form a trusted blockchain network via the identity chain, which not only clarifies the identity of the participant, but also determines the ownership of assets in the blockchain. The sample chain is configured to store the second data and the data application software. The contract chain is configured to perform a contract transaction on the data application software and the data processing result. The contract chain includes an interaction criteria, a legal provision, and a service logic rule of the contract, and contract terms agreed upon by both parties of the transaction implemented in accordance with a preset rule. As illustrated in FIG. 3, the data provider uploading the sample data to the sample chain is taken as an example. After performing a signature authentication via the identity chain, the data provider uploads the sample data to the sample chain, for the data demander to download the sample data.

In an optional implementation, before the data demander uploads the second data, the method further includes: auditing the second data via a data auditor. In order to further enhance the security of transaction data, both parties of the transaction encrypt their own transaction data with their own public keys respectively. The data demander encrypts a data application software with the public key from the data provider, and the data provider encrypts a data processing result with the public key from the data demander. The auditor then issues a license to the transaction data, so that both sides of the transaction can obtain corresponding transaction data by decrypting them with their own private keys.

At S102, a data application software is downloaded from the blockchain, in which the data application software is uploaded by the data demander to the blockchain.

After the data demander participating in the blockchain looks up the demand data (i.e., the second data), according to the service needs, a data application software is designed according to the second data, and the data application software is uploaded to the blockchain. Then, the data provider downloads the data application software from the blockchain. As illustrated in FIG. 3, the data provider downloads a transaction program (i.e., a data application software) uploaded by the data demander based on the sample data from the sample chain.

In an optional implementation, before downloading the data application software from the blockchain, the method further includes: auditing the data application software via the data auditor; and issuing the license to the data application software via the data auditor after the auditing is passed.

The data application software and the result of code analysis involved in the data transaction can be transferred only when they are approved by the auditor. For example, the data demander first uploads the data application software, demand sample data and a sample calculation result to the blockchain, which are in turn checked and audited by the auditor. The auditor checks and audits software security risks, which mainly lies in three parts: auditing the rationality, compliance, and legality of the codes, input parameters, and returned values/output values. After the check and audit of the auditor is passed, the data application software is then transacted to the data provider.

Further, when the data provider processes the data application software and the result of code analysis using the data application software, in order to ensure the security and compliance of the data or program, source codes of the data application software are completely open, and a change range of the program parameter is strictly defined.

At S103, a data processing result is obtained by processing the first data using the data application software, the data processing result is uploaded to the blockchain, and the data processing result is returned to the data demander via the blockchain.

In an optional implementation, before uploading the data processing result to the blockchain, the method further includes: auditing the data processing result via the data auditor.

In this embodiment, the data provider and the data demander do not transact the raw data, but relying on the capability of the blockchain, the data provider, taking the place of the data demander, completes a calculation of demand data, and return the data processing result via the blockchain to the data demander. Since a demand of the data demander for the raw data is transformed into a demand of the data demander for the data processing result, the data processing needs to be completed by the data provider, so as to convert a data transaction into a transaction of the data application software and the data processing result, to ensure that the raw data is not out of the network, and also to avoid the security problems such as the transaction data leakage and the transaction data abuse. At the same time, since the processed data processing result for the data demander is only valid in the analysis of this demand data, the value of further analysis and processing of this demand data is no longer present, effectively avoiding the risk of transaction data not being used in accordance with the agreed purpose.

Specifically, the data provider obtains the data processing result by processing the first data using the data application software, uploads the data processing result to the blockchain, and returns the data processing result to the data demander via the blockchain. The data processing result obtained by processing the sample data in the first data or the second data using the data application software by the data provider is a test data processing result, and the data processing result obtained by processing the first data is an official data processing result. As illustrated in FIG. 3, after the data provider downloads a transaction program uploaded by the data demander according to the sample data from the sample chain, a test result is obtained by processing the sample data according to the transaction program. The data provider generates a test contract via a contract chain and then uploads the test result to the contract chain. After the test result has passed through an audit of the data auditor and an agreement of the data demander, a formal transaction contract is generated, and then a formal data processing result is uploaded to the blockchain for a data transaction.

In an optional implementation, after auditing the data application software via the data auditor, a test contract is generated via the blockchain, and a test result is uploaded to the blockchain, in which the test result is obtained by processing the data application software; a formal transaction contract is generated based on the test result that has passed through an audit of the data auditor and an agreement of the data demander.

In an optional implementation, the auditing is completed in an automatic or semi-automatic manner, and a complete code contract is generated after a confirmation from a plurality of parties. The following is a detailed description of the steps or the process for transacting data among data transaction participants based on a blockchain in the embodiments of the disclosure in FIG. 2 in combination with FIG. 3, FIG.4, and FIG.5.

The process of the data provider uploading the sample data to the blockchain is illustrated in FIG. 3. For example, the data provider uploads desensitized raw data, a representative data sample, and pseudo data to the blockchain, for other users to view them. The data provider downloads the data application software audited via the data auditor, and uploads a test result based on a test contract generated via the blockchain. After the test result has passed through an audit of the data auditor and an agreement of the data demander, a formal transaction contract is generated, and then a formal data processing result is uploaded to the blockchain for a data transaction.

The process of the data demander uploading the data application software to the blockchain is illustrated in FIG. 4. The data demander downloads the sample data that can be transacted, designs a data application software according to the sample data and then uploads the data application software to the blockchain. After the data application software is audited by the auditor, a test contract is generated. Then the test result, that is audited and approved by the data auditor and is fed back from the data provider, is downloaded. A formal data transaction contract is initiated after confirming the correctness of the test result, and finally, a transaction of the data processing result is carried out via the blockchain.

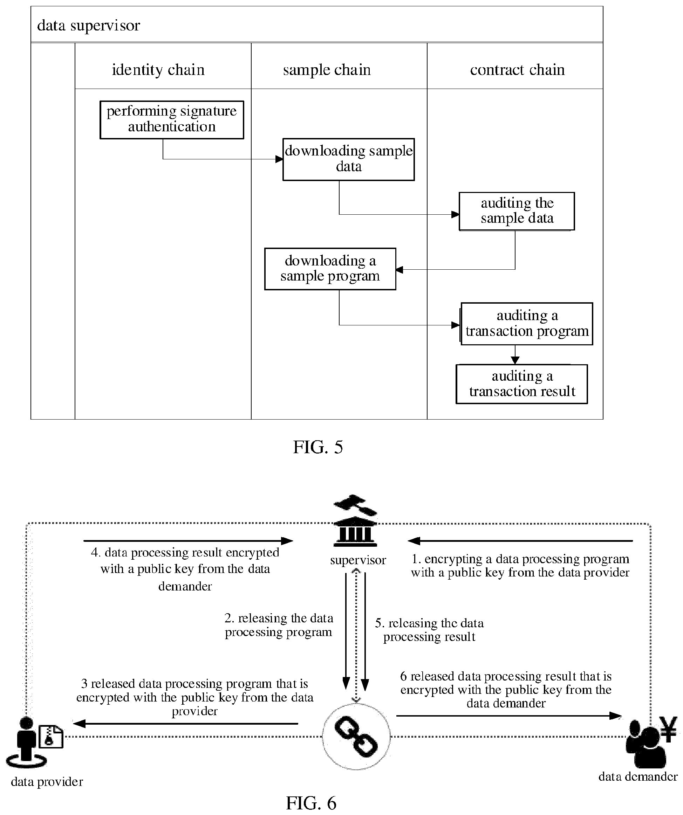

The process of the data auditor confirming the legality and the compliance of the transaction is illustrated in FIG. 5. When the data auditor confirms that a data processing request of the data demander is rational, the data auditor confirms the legality and compliance of the data provided by the data provider and the data application software provided by the data demander, releases/issues a approved contract to the blockchain after confirming the correctness of the test result, and then verifies the formal data processing result uploaded by the data provider. The codes themselves, the input parameter and the returned value of the data application software involved in the data transaction also have a certain security risk. Only when the auditor and the data provider jointly confirm the security and compliance of the program, the data application software can be used to process the target data, and the processing result can be transacted to the data demander. For example, the data application software and the result of the code analysis can be transferred only when they are approved by the auditor. That is, the data demander first uploads the data application software, the demand sample data, and the sample calculation result to the blockchain, and strictly defines the change range of the parameter, which are in turn checked and audited by the auditor. The auditor checks and audits the security risk of the data application software, mainly auditing the rationality, compliance and legality of the codes themselves, the input parameter and the returned value. After the check and audit of the auditor is passed, the data application software is then transacted to the data provider. After the data provider agrees with a rational calculation requirement of the data application software, the data application software is used to process the raw data, and the calculation result is returned to the auditor. Finally, the auditor transacts the calculation result to the data demander. Adding a auditor in the blockchain protects both parties performing data transaction during the transaction process, governs the data transaction in advance, and effectively blocks a non-compliant data transaction before circulation.

FIG. 6 is a schematic diagram of steps for transacting data based on a blockchain according to embodiments of the disclosure. Both parties of the transaction encrypt their own transaction data with their own public keys respectively, and a license is issued to the data processing result via the data auditor, which further enhances the security of the transaction data. This includes the following steps 1 to 5.

At step 1, the data demander encrypts the data application software and the sample result with the public key from the data provider, which are in turn transacted to the auditor.

At step 2, the auditor issues the license to the data application software, which is in turn issued to the blockchain.

At step 3, the data provider obtains the issued data application software from the blockchain, decrypts the issued data application software with its own private key, uses its own real data (i.e., first data) for data processing, and encrypts the data processing result with the public key from the data demander, which is in turn transacted to the auditor.

At step 4, the auditor issues a license to the encrypted data processing result, which is in turn issued to the blockchain.

At step 5, the data demander obtains the issued data processing result from the blockchain, decrypts the issued data processing result with its own private key, and obtains an expected data processing result. At this time, the transaction ends.

In the solution according to the embodiments of the disclosure, the second data corresponding to first data is uploaded to the blockchain, for the data demander to download the second data, in which the first data is raw data; the data application software is downloaded from the blockchain, in which the data application software is uploaded by the data demander to the blockchain; and the data processing result is obtained by processing the first data using the data application software, the data processing result is uploaded to the blockchain, and the data processing result is returned to the data demander via the blockchain. In the disclosure, the data provider and demander do not transact the raw data, and a transaction of the raw data is converted into a transaction of the data application software and the data processing result, so as to ensure that the raw data is not out of the network, effectively avoid the risk of transaction data not being used according to the agreed purpose, and avoid the security problems such as the transaction data leakage and the transaction data abuse. The participation of the data auditor further enhances the credibility and reliability of transaction data, guarantees the legality and compliance of the data transaction, and increases the credibility of the data transaction. Since the raw data is not retained in the blockchain, the risk of insufficient capacity of the blockchain is avoided, and the possibility of data leakage is also reduced. The security of the transaction data is further enhanced by encrypting the transaction data and issuing the license to the transaction data via the data auditor.

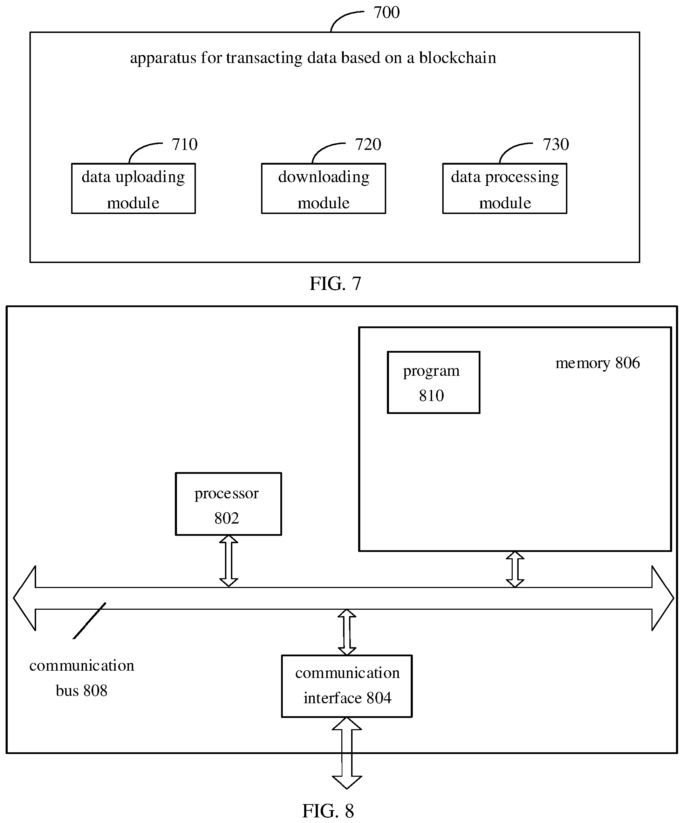

FIG. 7 is a structural diagram of an apparatus for transacting data based on a blockchain according to embodiments of the disclosure. The apparatus 700 includes: a data uploading module 710, a downloading module 720 and a data processing module 730.

The data uploading module 710 is configured to upload second data corresponding to first data to a blockchain, for a data demander to download the second data, in which the first data is raw data.

The downloading module 720 is configured to download a data application software from the blockchain, in which the data application software is uploaded by the data demander to the blockchain.

The data processing module 730 is configured to obtain a data processing result by processing the first data using the data application software, and upload the data processing result to the blockchain, and return the data processing result to the data demander via the blockchain.

In an optional implementation, the second data includes at least one of: sample data, data attributes, desensitized data, or pseudo data.

In an optional implementation, after uploading the second data corresponding to the first data to the blockchain, the method further includes: auditing the second data via a data auditor. Before downloading the data application software from the blockchain, the downloading module 720 is configured to audit the data application software via the data auditor. Before uploading the data processing result to the blockchain, the data processing module 730 is configured to audit the data processing result via the data auditor.

In an optional implementation, a license is issued via a data auditor before the data demander uploads the data application software to the blockchain. Before uploading the data processing result to the blockchain, the data processing module 730 is configured to encrypt the data processing result with a public key. After uploading the data processing result to the blockchain, the license is issued to the data processing result via the data auditor.

In an optional implementation, after downloading the data application software from the blockchain, the method further includes: generating a text contract via the blockchain, uploading a test result to the blockchain, in which the test result is obtained by processing the data application software; and generating a formal transaction contract based on the test result that has passed through an audit of the data auditor and an agreement of the data demander.

In an optional implementation, the auditing includes: completing the auditing in an automatic or semi-automatic manner, and generating a complete code contract after a confirmation from a plurality of parties, in which the plurality of parties include the data provider, the data demander, and the data auditor in the blockchain.

In an optional implementation, the blockchain includes: an identity chain, a sample chain, and a contract chain; in which the identity chain is configured to perform identity authentication of a data provider, the data demander and a data auditor in the blockchain; the sample chain is configured to store the second data and the data application software; and the contract chain is configured to perform a contract transaction on the data application software and the data processing result.

In the solution according to the embodiments of the disclosure, the second data corresponding to first data is uploaded to the blockchain, for the data demander to download the second data, in which the first data is raw data; the data application software is downloaded from the blockchain, in which the data application software is uploaded by the data demander to the blockchain; and the data processing result is obtained by processing the first data using the data application software, the data processing result is uploaded to the blockchain, and the data processing result is returned to the data demander via the blockchain. In the disclosure, the data provider and demander do not transact the raw data, and a transaction of the raw data is converted into a transaction of the data application software and the data processing result, so as to ensure that the raw data is not out of the network, effectively avoid the risk of transaction data not being used according to the agreed purpose, and avoid the security problems such as the transaction data leakage and the transaction data abuse. The participation of the data auditor further enhances the credibility and reliability of transaction data, guarantees the legality and compliance of the data transaction, and increases the credibility of the data transaction. Since the raw data is not retained in the blockchain, the risk of insufficient capacity of the blockchain is avoided, and the possibility of data leakage is also reduced. The security of the transaction data is further enhanced by encrypting the transaction data and issuing the license to the transaction data via the data auditor.

FIG. 8 is a structural diagram of a computing device according to embodiments of the disclosure. The embodiments of the disclosure do not limit the specific implementation of the computing device.

As illustrated in FIG. 8, the computing device includes a processor 802, a communication interface 804, a memory 806, and a communication bus 808. The processor 802, the communication interface 804, and the memory 806 communicate with each other via the communication bus 808. The communication interface 804 is configured for a network element communication with other devices such as clients or other servers. The processor 802 is configured to execute a program 810, which can specifically perform the steps of the method for transacting data based on a blockchain in the above embodiments.

Specifically, the program 810 may include a program code including computer operation instructions.

The processor 802 may be a central processing unit (CPU), an application specific integrated circuit (ASIC), or one or more integrated circuits configured to implement the embodiments of the disclosure. One or more processors included in the computing device may be the same type of processors , such as one or more CPUs; or may be different types of processors, such as one or more CPUs and one or more ASICs.

The memory 806 is configured to store the program 810. The memory 806 may include a high-speed random access memory (RAM), or it may also include a non-volatile memory, such as at least one disk memory.

The program 810 can be used to cause the processor 802 to perform the following operations: uploading second data corresponding to first data to a blockchain, for a data demander to download the second data, in which the first data is raw data; downloading a data application software from the blockchain, in which the data application software is uploaded by the data demander to the blockchain; and obtaining a data processing result by processing the first data using the data application software, uploading the data processing result to the blockchain, and returning the data processing result to the data demander via the blockchain.

In an optional implementation, the second data includes at least one of: sample data, data attributes, desensitized data, or pseudo data.

In an optional implementation, the program 810 can cause the processor to perform the following operations: after uploading the second data corresponding to the first data to the blockchain, auditing the second data via a data auditor; before downloading the data application software from the blockchain, auditing the data application software via the data auditor; and before uploading the data processing result to the blockchain, auditing the data processing result via the data auditor.

In an optional implementation, the program 810 can cause the processor to perform the following operations: issuing a license to the data application software via a data auditor before the data demander uploads the data application software to the blockchain; before uploading the data processing result to the blockchain, encrypting the data processing result with a public key; and before uploading the data processing result to the blockchain, issuing a license to the data processing result via the data auditor.

In an optional implementation, the program 810 can cause the processor to perform the following operations: after downloading the data application software from the blockchain, generating a test contract via the blockchain, and uploading a test result to the blockchain, in which the test result is obtained by processing the data application software; and generating a formal transaction contract based on the test result that has passed through an audit of the data auditor and an agreement of the data demander.

In an optional implementation, the auditing includes: completing the auditing in an automatic or semi-automatic manner, and generating a complete code contract after a confirmation from a plurality of parties, in which the plurality of parties include the data provider, the data demander, and the data auditor in the blockchain.

In an optional implementation, the blockchain includes: an identity chain, a sample chain, and a contract chain; in which the identity chain is configured to perform identity authentication of a data provider, the data demander and a data auditor in the blockchain; the sample chain is configured to store the second data and the data application software; and the contract chain is configured to perform a contract transaction on the data application software and the data processing result.

In the solution according to the embodiments of the disclosure, the second data corresponding to first data is uploaded to the blockchain, for the data demander to download the second data, in which the first data is raw data; the data application software is downloaded from the blockchain, in which the data application software is uploaded by the data demander to the blockchain; and the data processing result is obtained by processing the first data using the data application software, the data processing result is uploaded to the blockchain, and the data processing result is returned to the data demander via the blockchain. In the disclosure, the data provider and demander do not transact the raw data, and a transaction of the raw data is converted into a transaction of the data application software and the data processing result, so as to ensure that the raw data is not out of the network, effectively avoid the risk of transaction data not being used according to the agreed purpose, and avoid the security problems such as the transaction data leakage and the transaction data abuse. The participation of the data auditor further enhances the credibility and reliability of transaction data, guarantees the legality and compliance of the data transaction, and increases the credibility of the data transaction. Since the raw data is not retained in the blockchain, the risk of insufficient capacity of the blockchain is avoided, and the possibility of data leakage is also reduced. The security of the transaction data is further enhanced by encrypting the transaction data and issuing the license to the transaction data via the data auditor.

The embodiments of the disclosure provide a non-volatile computer storage medium for storing at least one executable instruction, in which the executable instruction executes the method for transacting data based on a blockchain in any one of the above method embodiments.

An algorithm or display herein is not inherently associated with any particular computer, any virtual system, or other device. Various general systems can also be used in conjunction with the teachings herein. From the above descriptions, the structure required to construct such a system is obvious. In addition, the embodiments of the disclosure are not specific to any particular programming language. It should be understood that the content of the disclosure described herein can be implemented in a variety of programming languages, and the above descriptions for specific languages are intended to disclose the preferred implementation of the disclosure.

A lot of details are given in the description provided herein. However, it should be understood that the embodiments of the disclosure can be practiced without these specific details. In some examples, well-known methods, structures and techniques are not shown in detail so as not to obscure the understanding of the disclosure.

Similarly, it should be understood that, in the above description of exemplary embodiments of the disclosure, various features in the embodiments of the disclosure are sometimes grouped together into a single embodiment, drawing, or description thereof, in order to streamline the disclosure and to assist in understanding one or more of various aspects of the disclosure. However, the disclosed method should not be interpreted as reflecting the intention that the claims in the disclosure that need to be protected have more features than features described in each claim. More specifically, as reflected in the claims below, the aspects of the disclosure include all features less than features of the previously disclosed single embodiments. Accordingly, the claims conforming to the detailed description are thus explicitly incorporated into the detailed description, in which each claim is a separate embodiment of the present disclosure.

It may be understood by those skilled in the art that modules in the apparatus in the embodiment may be adaptively altered and be set in one or more apparatuses different from that in the present embodiment. A module or unit or component in the embodiment can be combined into a single module or unit or component, and they can also be divided into more submodules or subunits or subcomponents. Except that at least some of such features and/or processes or units are mutually exclusive, all features disclosed in the disclosure (including accompanying claims, abstract and attached drawings) and all processes or units of any method or device disclosed herein can be combined in any combination. Unless otherwise explicitly stated, each feature disclosed in the disclosure (including accompanying claims, abstract, and attached drawings) can be replaced by an alternative feature providing the same, equivalent, or similar purpose.

In addition, those skilled in the art can understand that although some embodiments herein include some features that are not other features included in other embodiments, the combination of features of different embodiments is meant to fall within the scope of the disclosure and to form different embodiments. For example, in the claims below, any one of the embodiments that need to be protected may be used in any combination.

The individual component in the embodiments of the disclosure can be implemented in hardware, in software modules running on one or more processors, or in a combination of them. Those skilled in the art should understand that a microprocessor or a digital signal processor (DSP) can be used in practice to implement some or all of the functions of some or all of the components according to the embodiments of the disclosure. The disclosure may also be implemented as a device or an apparatus program (e.g., a computer program and a computer program product) for performing some or all of the methods described herein. The program for implementing the disclosure may be stored on a computer-readable medium or may have the form of one or more signals. Such signals can be downloaded from a website, provided on a carrier signal, or provided in any other form.

It should be noted that the above embodiments are just explanatory rather than to limit the present disclosure, and that those skilled in the art may design alternative embodiments without departing from the scope of the attached claims. In the claims, any reference number located in parentheses should not be constructed as a limitation of the claims. The word "comprise/include" does not exclude the existence of an element or a step not listed in the claims. The word "a/an" or "one" before a component does not exclude the existence of a plurality of such components. The disclosure can be implemented by means of hardware including a number of different components and by means of a properly programmed computer. In the claims that lists units of several apparatuses, several of these apparatuses may be embodied by the same hardware item. The use of the words first, second, and third does not indicate any sequence. These words can be interpreted as names. The steps in the above embodiments shall not be construed as a limitation of the execution sequence unless otherwise specified.

## Claims

1. A method for transacting data based on a blockchain, comprising:
uploading second data corresponding to first data to a blockchain, for a data demander to download the second data, wherein the first data is raw data;
downloading a data application software from the blockchain, wherein the data application software is designed by the data demander based on the second data and uploaded by the data demander to the blockchain; and
obtaining a data processing result by processing the first data using the data application software, uploading the data processing result to the blockchain, and returning the data processing result to the data demander via the blockchain.

2. The method according to claim 1, wherein the second data comprises at least one of: sample data, data attributes, desensitized data, or pseudo data.

3. The method according to claim 1, wherein after uploading the second data corresponding to the first data to the blockchain, the method further comprises:
auditing the second data via a data auditor, for the data demander to download audited second data;
before downloading the data application software from the blockchain, the method further comprises:
auditing the data application software via the data auditor;
before uploading the data processing result to the blockchain, the method further comprises:
auditing the data processing result via the data auditor.

4. The method according to claim 1, wherein
issuing a license to the data application software via a data auditor before the data demander uploads the data application software to the blockchain;
before uploading the data processing result to the blockchain, the method further comprises: encrypting the data processing result with a public key;
before uploading the data processing result to the blockchain, the method further comprises:
issuing a license to the data processing result via the data auditor.

5. The method according to claim 3, after downloading the data application software from the blockchain, the method further comprises:
generating a test contract via the blockchain, and uploading a test result to the blockchain, wherein the test result is obtained by processing the data application software; and
generating a formal transaction contract based on the test result that has passed through an audit of the data auditor and an agreement of the data demander.

6. The method according to claim 3, wherein the auditing comprises:
completing the auditing in an automatic or semi-automatic manner, and generating a complete code contract after a confirmation from a plurality of parties, wherein the plurality of parties comprise the data provider, the data demander, and the data auditor in the blockchain.

7. The method according to any one of claims 1 to 6, wherein the blockchain comprises: an identity chain, a sample chain, and a contract chain;
wherein the identity chain is configured to perform identity authentication of a data provider, the data demander and a data auditor in the blockchain;
the sample chain is configured to store the second data and the data application software; and
the contract chain is configured to perform a contract transaction on the data application software and the data processing result.

8. An apparatus for transacting data based on a blockchain, comprising:
a data uploading module, configured to upload second data corresponding to first data to a blockchain so that a data demander can download the second data, wherein the first data is raw data;
a downloading module, configured to download a data application software from the blockchain, wherein the data application software is uploaded by the data demander to the blockchain; and
a data processing module, configured to obtain a data processing result by processing the first data using the data application software, upload the data processing result to the blockchain, and return the data processing result to the data demander via the blockchain.

9. A computing device, comprising a processor, a memory, a communication interface and a communication bus, wherein the processor, the memory and the communication interface communicate with each other via the communication bus;
the memory is configured to store at least one executable instruction, wherein the executable instruction causes a processor to perform operations of the method for transacting data based on a blockchain according to any one of claims 1 to 7.

10. A computer storage medium for storing at least one executable instruction, wherein the executable instruction causes the processor to perform operations of the method for transacting data based on a blockchain according to any one of claims 1 to 7.
